(19) Europäisches Patentamt

European Patent Office

Office européen des brevets

(11) **EP 1 149 713 A2**

(12) **EUROPEAN PATENT APPLICATION**

(43) Date of publication:
**31.10.2001 Bulletin 2001/44**

(51) Int Cl.⁷: **B60C 15/024**

(21) Application number: **01109382.0**

(22) Date of filing: **18.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Lee, Ching-Chih**<br>  **Hudson, OH 44236 (US)**<br>• **Talug, Ahmet**<br>  **Stow, OH 44224 (US)** |
| (30) Priority: **28.04.2000 US 562710** | (74) Representative: **Leitz, Paul**<br>**Goodyear S.A.,**<br>**Patent-Department,**<br>**Avenue Gordon Smith**<br>**7750 Colmar-Berg (LU)** |
| (71) Applicant: **THE GOODYEAR TIRE & RUBBER COMPANY**<br>**Akron, Ohio 44316-0001 (US)** | |

(54) **A bead profile for pneumatic tires**

(57)  A pneumatic tire (30) has a tread portion (31), a pair of sidewall portions (21) and a pair of bead portions (33). Each bead portion (33) has a bead core (35), and each bead core (35) has a radially inner surface defining a bead base. Radially inward of, and wider than, each bead base is a bead seat profile (23). The bead seat profile (23) provides an interference fit between the tire (30) and the ledge (42) of the wheel rim (40) to which the tire (30) is to be mounted. The bead seat profile has an interference distribution which has a localized concavity (20) at an axial location at or near the center of the bead core (35) when the tire (30) is mounted and inflated. The disclosed bead seat profile (23) can increase the tire's rim slip resistance without causing difficulty in mounting, or alternatively can make mounting the tire (30) easier without sacrificing the rim slip resistance.

FIG—3A

EP 1 149 713 A2

**Description**

Technical Field

This invention relates to pneumatic tires and the interrelationship between the tire and its design rim. More particularly this invention discloses a unique bead profile and a method of designing a tire mold ring so as to maximize the frictional torque between the wheel rim and the tire, thereby reducing the possibility of rim slip when the tire is subjected to a high driving or braking torque. Alternatively the invention can be used to make tire mounting easier without sacrificing the rim slip resistance.

Background of the Invention

When a tire is subjected to a driving or braking torque greater than the limiting frictional torque which can be generated between the wheel rim and the tire, it will slip circumferentially on the rim. This is called rim slip or torque slip. If it is due to a driving torque, the rim would move ahead of the tire in the direction of rotation. The reverse happens for a high braking torque. In either case, the balance of the tire-rim assembly is lost, resulting in vibration and/or adverse effects on handling.

The tire-rim frictional torque is the integral of the product of contact pressure, friction coefficient, and the distance to the wheel center over the entire tire-rim interface. The friction coefficient depends on the type and amount of lubricant used for mounting, the drying time before the tire is used, the rubber compound, the rim material and surface roughness, the magnitude of contact pressure, and environmental factors such as temperature and humidity. One should use a minimum amount of lubricant and allow sufficient drying time if rim slip is of concern.

On the other hand, the contact pressure distribution depends on the geometrical relationship between the tire's bead area and the rim, the construction and position of the bead core, the inflation pressure, and other tire loads such as vertical, lateral, and centrifugal forces. The tire's sharp diameter is smaller than the rim's sharp diameter, thereby yielding an interference fit when the tire is mounted onto the rim. The larger the interference, the tighter the fit. If rim slip is of concern, one may consider reducing the tire's sharp diameter to make the fit tighter. However, with the increased interference, the required inflation pressure to mount the tire may become so high as to impose danger to the operator.

The interference is generally not constant along the tire-rim interface. For a specified rim, the interference distribution is determined by the external tire profile in the bead area, which is usually imparted by a mold ring (also called bead ring). The primary object of this invention is to design the bead or mold ring profile so that the tire-rim interference distribution would result in the optimal contact pressure distribution for the highest rim slip resistance without causing difficulty in mounting. Another object is to make the tire mounting easier without reducing the rim slip resistance.

In US-A- 5,464,051 to Beard et al, a specified bead seat profile was proposed whereby the bead seat had a single taper angle of about 6.5° for a rim with a ledge taper of 5°. It was claimed for a cylindrical strap bead core with a flat base that the uniform compression of the rubber gauge under the bead core reduced the variability in the mounting pressure.

Beard's comparative control tire of the prior art had an angular bead seat profile having a 5° and a 10.5° taper angle combination. The 5° to 10.5° transition point was close to the heel. The present invention departs from the prior art approaches in that the focus is placed on the tire-rim interference distribution along the rim ledge and the resulting contact pressure distribution. The bead seat profile is designed to increase the rim-slip resistance while keeping the peak contact pressure in check, or to lower the peak contact pressure without reducing the rim-slip resistance. The way in which this design approach is best achieved is detailed in the description of the invention as follows.

Summary of the Invention

A pneumatic tire has a tread portion, a pair of sidewall portions and a pair of bead portions. Each bead portion has a bead core, and each bead core has a radially inner surface defining a bead base. Radially inward of, and wider than, each bead base is a bead seat profile. The bead seat profile provides an interference fit between the tire and the ledge of the wheel rim to which the tire is to be mounted. The interference distribution has a localized concavity at an axial location at or near the center of the bead core when the tire is mounted and inflated. The disclosed bead seat profile can increase the tire's rim slip resistance without causing difficulty in mounting, or make mounting easier without sacrificing the rim slip resistance.

The bead base may be flat or curved. If flat, it may be parallel to the tire's axis or inclined at an angle 0° to 25°, preferably close to the rim ledge's inclination angle.

The bead core can be of any cross-sectional shape, including, but not limited to triangular, rectangular, hexagonal, and round or circular.

The present invention applies to all types of rim-fitting pneumatic tires, tubed and tubeless, radial-ply and biased-ply, including, but not limited to, passenger tires, truck tires, aircraft tires, race tires, farm tires, and off-the-road tires.

The bead seat profile extends from the heel end to the toe end, including the point B radially tangent to the axially outer side of the bead core, and the point D radially tangent to the axially inner side of the bead core. According to the present invention, the tire-rim interference distribution along the bead seat has a local concavity between the points B and D, the interference measurement being defined as the radially outward distance from the bead seat profile of the cured, unmounted tire to the overlaid rim ledge profile at a given axial location. If the molded base width is not equal to the rim width, some axial shift of the rim profile relative to the tire profile is necessary in the overlay to make the middle point of the nominally vertical flange portion of the tire coincide with the vertical flange of the rim.

To practice the present invention, a concavity can be created by proper combinations of the rates of interference change, such as from zero to positive, from negative to positive, or from positive to more positive, from the direction of the heel side adjacent the concavity towards the toe side adjacent the concavity.

The location of concavity in the interference distribution is close to the point under the center of the bead core when the tire is mounted and inflated. However, in the unmounted configuration the location of concavity might be closer to the point B than to the point D because of the deformation and rotation of the bead core during mounting and inflation.

For rims with a single ledge taper angle, such as 5° for passenger tire rims and 15° for truck tire rims, the local concavity in the interference distribution corresponds to a local concavity in the bead seat profile. The location of the concavity, when the tire is mounted onto its rim, is compressed in full contact with the rim ledge.

The preferred method of designing a bead seat profile for a pneumatic tire has the steps of selecting an initial profile $L_1$, extending from the bead heel end to the bead toe end; locating the bead core center of the mounted and inflated tire with anticipated bead core deformation and rotation during mounting and inflation; extending a radial line from the bead core center to intersect the initial profile $L_1$ at a point Q; establishing a local concavity by moving the point Q radially outward to another point Q'; and connecting the point Q' to the two ends of the profile $L_1$ by straight lines or smooth curves to form a revised bead seat profile.

If a tire with the initial bead seat design has been made, the point Q could also be identified experimentally as the point with the highest contact pressure, or the point under the bead core when the tire is mounted and inflated to the normal pressure.

To further refine and optimize the profile, an analysis such as a finite element analysis can be conducted to study the tire-rim contact pressure distribution, with the bead seat profile divided into multiple, preferably ten or more, line segments. Alternatively, a tire can be made with the bead seat profile and the contact pressure distribution measured experimentally. Based on the analysis or experiment, examine the location and magnitude of the peak pressure. Then, establish a maximum contact pressure based on a limiting mounting inflation pressure. Keeping the peak contact pressure under the preset maximum, iteratively move the individual end points of each segment radially inward or outward until the area under the pressure distribution curve no longer appreciably increases. At that profile the amount of torque resisting rim slip is optimized for that preset maximum contact pressure. Other bead design features such as an extended toe to ensure air seal can be incorporated.

Combining the adjustment of the bead seat profile's sharp diameter with the profile revision procedure described above, one can achieve a higher rim slip resistance without causing mounting difficulty, or make mounting easier without reducing the rim slip resistance, or in some cases achieve a higher rim slip resistance and easier mounting. Concrete examples of bead seat profiling are provided in the following description.

Definitions

"Aspect ratio" of the tire means the ratio of its section height (SH) to its section width (SW) multiplied by 100% for expression as a percentage.

"Axial" and "axially" means lines or directions that are parallel to the axis of rotation of the tire.

"Bead" means that part of the tire comprising an annular tensile member typically attached to or wrapped by ply cords and shaped, with or without other reinforcement elements such as flippers, chippers, apexes, toe guards and chafers, to fit the design rim.

"Belt structure" or "Reinforcing Belts" means at least two annular layers or plies of parallel cords, woven or unwoven, underlying the tread, unanchored to the bead, and having both left and right cord angles in the range from 17 degrees to 27 degrees with respect to the equatorial plane of the tire.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands of which the plies in the tire are comprised.

"Design rim" means a rim having a specified configuration and width. For the purposes of this Specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organisation - Standards Manual and the term design rim means the same as the standard measurement rims. In Japan, the standard organization is The Japan Automobile Tire Manufacturer's Association.

"Design rim width" means the specified distance axially between rim flanges. For the purpose of this specification, the design rim width (D) is taken as (the minimum recommended rim width plus the maximum recommended rim width)/2 as specified by the appropriate industry standards.

"Equatorial plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Normal inflation pressure" refers to the specific design inflation pressure and load assigned by the appropriate standards organization for the service condition for the tire.

"Normal load" refers to the specific design inflation pressure and load assigned by the appropriate standards organization for the service condition for the tire.

"Ply" means a continuous layer of rubber-coated parallel cords.

"Radial" and "radially" means directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section height" (SH) means the radial distance from the nominal rim diameter to the outer diameter of the tire at its equatorial plane.

"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Sharp diameter" means the diameter as measured radially across the tire through the axis to the points defined by the intersection of a line extending tangent the bead seat and a line extending tangent the bead flange.

"Shoulder" means the upper portion of a sidewall just below the tread edge.

"Sidewall" means that portion of a tire between the tread and the bead.

"Tread width" means the arc length of the tread surface in the axial direction, that is, in a plane passing through the axis of rotation of the tire.

Brief Description of the Drawings

    Figure 1 is a cross-sectional view of a cured, unmounted tire (30) made in accordance with the invention.

    Figure 2 is a cross sectional view of a standard design rim (40).

    Figure 3A is an enlarged cross sectional view of the bead (33) taken from Figure 1, with one side of the rim (40) profile overlaid.

    Figure 3B is a prior art bead (33) design for the tire (30) in Figure 1, with one side of the rim (40) profile overlaid.

    Figure 4 is a cross sectional view of a passenger tire (30) with a prior art bead design, as an example to illustrate the application of the present invention.

    Figure 5 shows the bead (33) profile of the tire (30) in Figure 4, superimposed on the rim (40) profile.

    Figure 6 is an enlarged view of the bead seat profile of the prior art tire (30) (dotted line) in Figure 4, plus two inventive bead seat profiles (dashed line and solid line), superimposed on the rim.

    Figure 7 shows the contact pressure distributions for the prior art (dotted line) and the two inventive bead seat profiles (dashed line and solid line) in Figure 6 at 26 psi inflation.

Detailed Description of the Invention

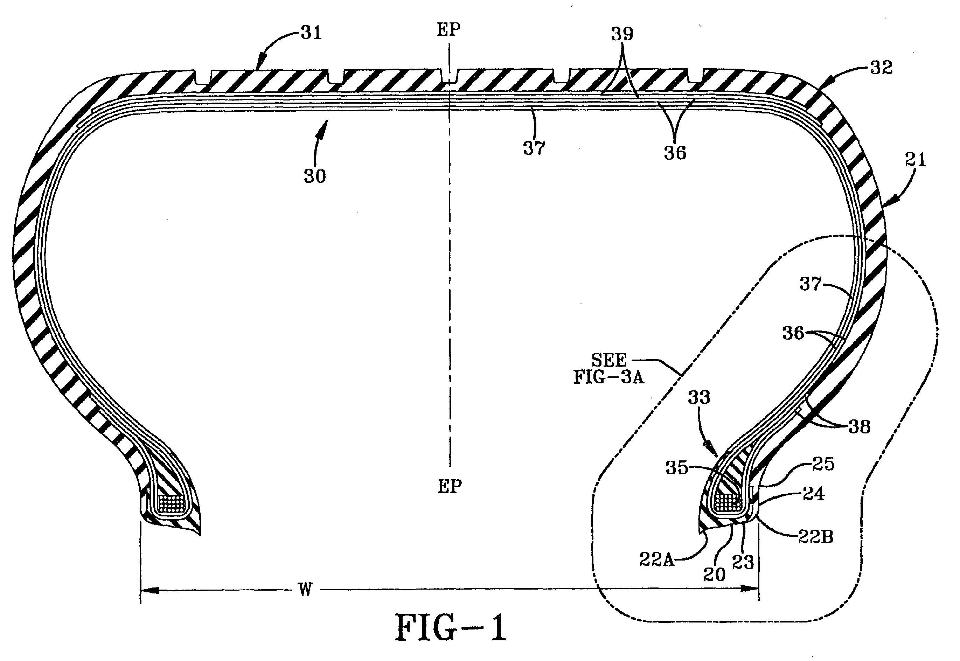

Although the invention is not limited to any particular type of tires, we will use an exemplary radial-ply passenger tire (30) for illustration. Referring to Figure 1, there is illustrated a cross sectional view of a cured, unmounted tire (30) made in accordance with the present invention. In the particular embodiment, the tire (30) is a low aspect ratio passenger tire. As shown, the beads (33) are spaced axially a distance (W) equal to the molded base width.

The tire (30) is provided with a ground-engaging tread portion (31) which terminates in the shoulder portions (32) at the lateral edges of the tread. Axially outer sidewall portion (21) extends from shoulder portion (32) and terminates in the bead portion (33), the bead portion having an annular inextensible tensile member (35). The tire (30) is further provided with a carcass reinforcing structure (36) which extends from the tensile member (35) through the sidewall portion (21), the tread portion (31), the opposite sidewall portion (21) down to the opposite tensile member (35). The turnup ends (38) of the carcass reinforcing structure (36) are wrapped about the tensile members (35). As illustrated, the bead portion (33) has a toeguard (41) wrapped about the reinforcing member (36) and tensile member (35). The tire (30) may include a conventional innerliner (37) forming the inner peripheral surface of the tire (30) if the tire is to be of the tubeless type.

Placed circumferentially about the radially outer surface of the carcass reinforcing structure (36), beneath the tread portion (31), is a tread reinforcing belt structure (39). In an exemplary embodiment, the belt structure (39) comprises two single cut belt plies and the cords of the belt plies are oriented at an angle ranging between 17° and 25° with respect to the equatorial plane of the tire. The cords of one belt ply are disposed in an opposite direction to the equatorial plane from that of the cords of the other belt ply. However, the belt structure (39) may comprise any number of belt plies of any desired configuration and the cords may be disposed at any desired angle.

The carcass reinforcing structure (36) includes at least one reinforcing ply structure each comprising one layer of parallel cords. The cords of the reinforcing ply structure (36) are oriented at an angle of at least 75° with respect to the equatorial plane EP for radial-ply tires. The cords reinforcing the carcass ply may be of any material normally used for cord reinforcement of rubber articles, for example, and not by way of limitation, rayon, nylon and polyester. The reinforcing ply structure (36) has its turnup ends (38), which wrap about the bead core (35).

Before mounting the tire (30) on a rim and inflating it, it has the shape imparted to it by the mold, with slight changes due to cooling from the curing temperature. After mounting the tire (30) on the rim, the inclination of the bead portions (33) of the tire is imposed by the rim.

The bead (33) has a first annular surface (23) located between the bead toe (22A) and the bead heel (22B). The first annular surface has a specified profile, herein referred to as the bead seat profile (23), when the beads (33) are spaced a distance equal to the molded base width W, it being understood that the molded base width is not necessarily equal to the design rim width. For the purpose of this specification, the design rim width is the width of the rim on which the tire is to be mounted if only one rim size will be used. If the tire (30) is designed to fit rims of sizes in a range, then the design rim width is the average of the specified maximum and minimum rim widths, the widths being measured axially between the rim flanges. The range of rim widths is established by the industry standards applicable where the tire is made. In the United States, for example, the Tire and Rim Association standards have established a range of recommended rim widths for "J" type rims in the 14" to 16" rim diameter size, the range of widths for a tire being 6.5 to 8.0 inches (16.5 to 20.3 cm). The design rim width as defined in the application, therefore, is 7.25 inches (18.4 cm) for the 225/55R16 tire.

The bead portion (33) has a second annular surface (24) that extends radially outwardly from the bead heel portion (22B). The second surface (24) is oriented nominally perpendicular to the axis of rotation. Extending from the second surface (24) is a curved third surface (25). The third surface (25) tangentially extending from the second surface (24), has a radius of curvature which may be equal to, or different from, the radius of curvature of the design rim's flange.

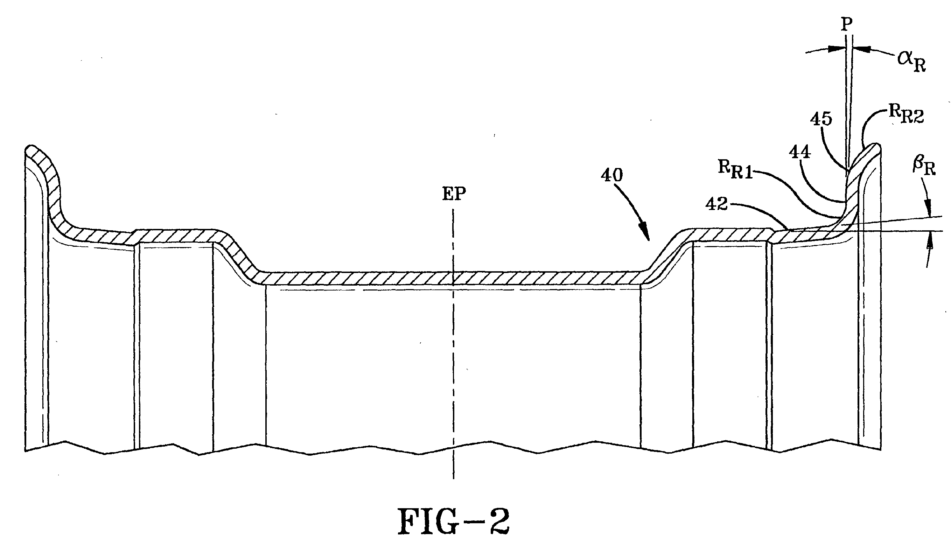

In Figure 2, a design rim (40) is shown. The design rim has a ledge (42) inclined at an angle $\beta_R$, nominally 5° for a passenger tire rim, relative to the axis of rotation, and a vertical flange (44) oriented at an angle $\alpha_R$, nominally zero, with respect to the perpendicular to the axis of rotation. Between the vertical flange (44) and the ledge (42), the rim (40) has a radius of curvature. At the radially outer portion (45) of the rim flange, the surface of the flange has another radius of curvature.

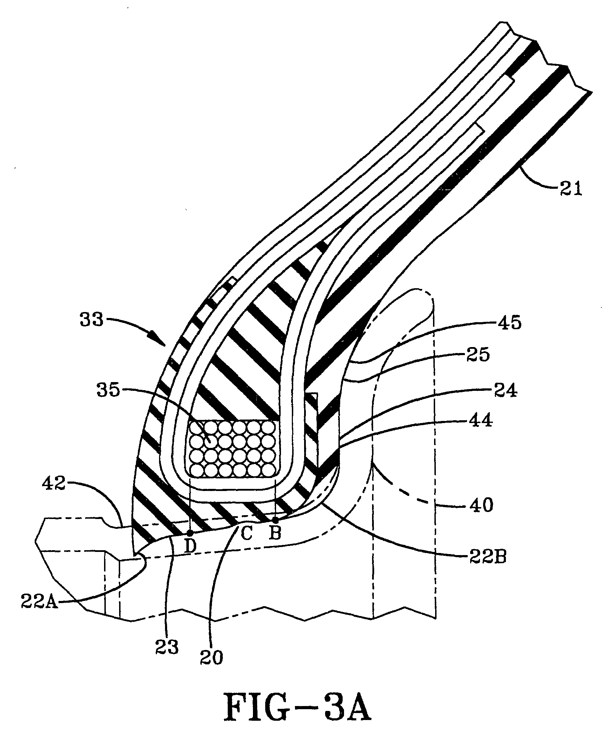

Figure 3A is an enlarged cross sectional view of the bead (33) of the unmounted tire (30) in Figure 1, with one side of the rim (40) profile overlaid. If the rim width is not equal to the molded base width, the rim profile needs to be shifted in the axial direction to make the second annular surface (24) and the vertical flange portion (44) of rim profile coincide for the overlay. If the second annular surface (24) is not exactly perpendicular to the tire axis, then the axial shift is based on the coincidence of the middle point of this portion of the tire profile and the vertical flange (44) of the rim (40). At a given axial location, the interference between the tire (30) and the rim (40) is the radially outward distance from the bead seat profile (23) of the cured, unmounted tire (30) to the overlaid rim ledge profile (42).

The bead seat profile (23) extends from the heel end (22B) to the toe end (22A), including the point B radially tangent to the axially outer side of the bead core (35), and the point D radially tangent to the axially inner side of the bead core (35). The interference along the ledge interface is not constant, nor increasing or decreasing at a constant rate, but has a local concavity (20) between the points B and D. The location C of concavity (20) is close to the point under the center of the bead core (35) when the tire is mounted and inflated. However, for most tires (30), the bead core (35) moves radially and axially outward, and rotates clockwise during mounting and inflation if the bead cross-section is viewed with the toe end (22A) on the left side. Therefore the location C of concavity (20) is closer to the point B than to the point D in the unmounted configuration, as shown in Figure 3A.

As a contrast, Figure 3B is a prior art bead design (33) for the same tire, again with the rim profile overlaid. The points B and D on the bead seat profile (23) are defined in the same way as in Figure 3A. Between the points B and D, the interference distribution does not have a local concavity. The particular bead design shown in Figure 3B has a single ledge taper angle of 6.5° as taught by Beard et al in US-A- 5,464,051. Other prior art bead designs as cited by Beard et al might have dual taper angles, possibly creating a local concavity in the interference distribution. However, since the transition point from one taper angle to another was not close to the point under the center of the bead core of the mounted and inflated tire, they could not achieve the benefit of the present invention, as explained below.

In general, the contact force between the tire (30) and the rim (40) comes mostly from two regions: (a) the ledge region (42), which is the focus of the present disclosure, and (b) the upper flange region (45). The relative significance of the two contributions to the rim-slip resistance depends on the tire-rim interference and the inflation pressure. As far as the contact pressure distribution is concerned, there are many variables from a tire designer's viewpoint such as mold ring profile (sharp diameter, ledge width, ledge taper, heel radius), bead core (construction, taper, and inside diameter), and compound moduli. These variables can be cast into three fundamental design factors: (a) the tire-rim interference distribution, (b) the rubber gauge and modulus distribution, and (c) the stiffness distribution of the bead core. Among them, the interference is the dominant factor for the magnitude of the contact pressure in the ledge region.

When the tire (30) is mounted and inflated, the contact pressure has a peak roughly under the center of the bead core (35) and decreases towards the two sides. It is desirable to limit the magnitude of the peak pressure for three reasons: (a) to prevent possible difficulty in mounting the tire, (b) to avoid excessive permanent set of the rubber compound which would decrease the effective compression, and (c) to limit the reduction of friction coefficient with pressure.

The inventors utilized finite element analyses for various tire bead profiles to study the tire-rim contact pressure distributions. In each case they could then find the peak contact pressure and calculate the following integral which is the total tire-rim frictional torque T for one side of a wheel:

$$T = \int r\mu p 2\pi r \, ds \approx \mu \int p 2\pi r^2 \, ds \approx 2\pi r^2 \, \mu \int p \, ds$$

where

T = total tire-rim frictional torque
r = the distance from the wheel axis to a point on the tire-rim interface
μ = friction coefficient
p = contact pressure at any point along the tire-rim interface
ds = an infinitesimal arc length along the tire-rim interface

The first "approximately equal" sign holds when the friction coefficient is nearly constant. In reality, friction coefficient generally decreases with contact pressure until reaching a plateau when the pressure is sufficiently high. If we further neglect the variation of r, as indicated by the second "approximately equal" sign, then T is proportional to the integral ∫ p ds , the area under the pressure distribution curve. For the ease of understanding, the objective of maximizing the frictional torque by designing the mold ring can be approximated as maximizing the area under the pressure curve. Along with the peak pressure consideration, it is preferred to have a flatter pressure distribution in the ledge region.

The flattening of the pressure curve is achieved in the present invention by introducing a local concavity (20) in the tire-rim interference distribution at the point C on the bead seat profile (23) where a high pressure peak would otherwise occur. This point is roughly under the center of the bead core (35) in the mounted and inflated configuration. As explained earlier, for most tires, due to the deformation and rotation of the bead core (35) during mounting and inflation, the location of concavity is slightly closer to the point B than to the point D in the unmounted configuration, as shown in Figure 3A. The local concavity (20) is defined by a positive change in the rate of the interference change in either direction extending away from the concavity. For any typical bead seat profile, depending on the taper angles of the rim ledge and of the bead seat profile, the rate of change at any point could be positive (interference increasing in the direction from B to D), negative (interference decreasing), or zero (interference unchanged). To practice the present invention, a concavity (20) can be created by proper combinations of the rates of interference change, such as from zero to positive, from negative to positive, or from positive to more positive, from the direction of the heel side adjacent the concavity towards the toe side adjacent the concavity.

For rims with a single ledge taper angle, such as 5° for passenger tire rims and 15° for truck tire rims, the local concavity (20) in the interference distribution corresponds to a local concavity (20) in the bead seat profile (23). The location C of the concavity (20), when the tire (30) is mounted onto its rim (40), is compressed in full contact with the rim ledge (42).

There are two attributes of a tire-rim interference or contact pressure distribution: its shape and magnitude. The shape of the bead seat pressure distribution depends heavily on the shape of the interference distribution, and the magnitude of the pressure distribution depends heavily on the magnitude of the interference distribution. For a specified rim (40), increasing or decreasing the tire bead's sharp diameter will decrease or increase the interference, and therefore decrease or increase, respectively, the contact pressure. If a higher rim slip resistance is sought and the mounting inflation pressure can be increased, then the tire designer can simply maintain the bead seat profile (23) and reduce its sharp diameter. Combining the sharp diameter adjustment with the bead seat profiling discussed above, one can optimize the contact pressure distribution to have the highest rim slip resistance for a preset peak pressure. Any straight line, circular arc, spline, and combination of them can be used to form the bead seat profile (23). Other features of bead seat profile design, such as an extended toe for a tight air seal can be incorporated in the optimization.

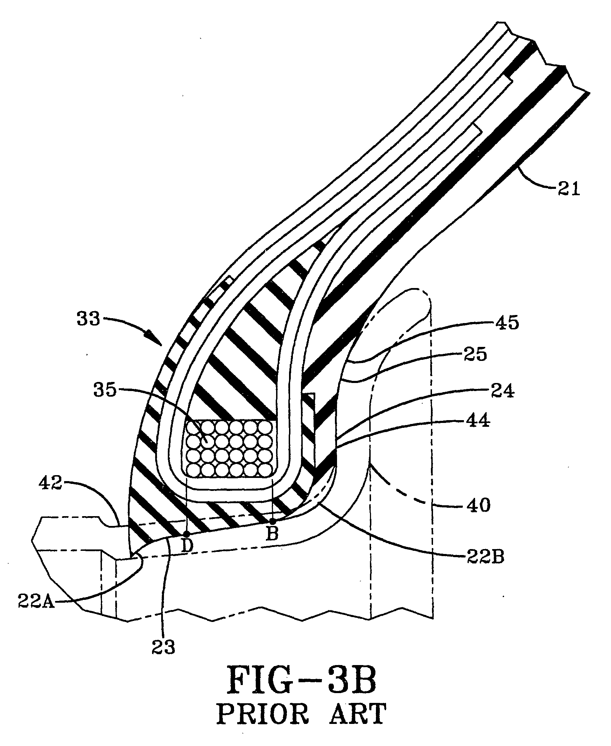

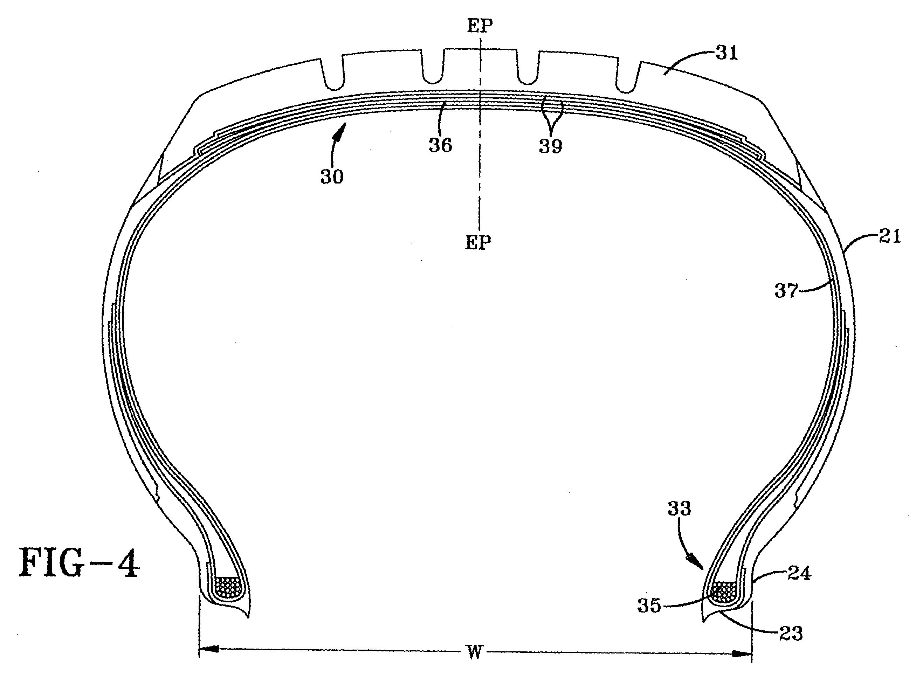

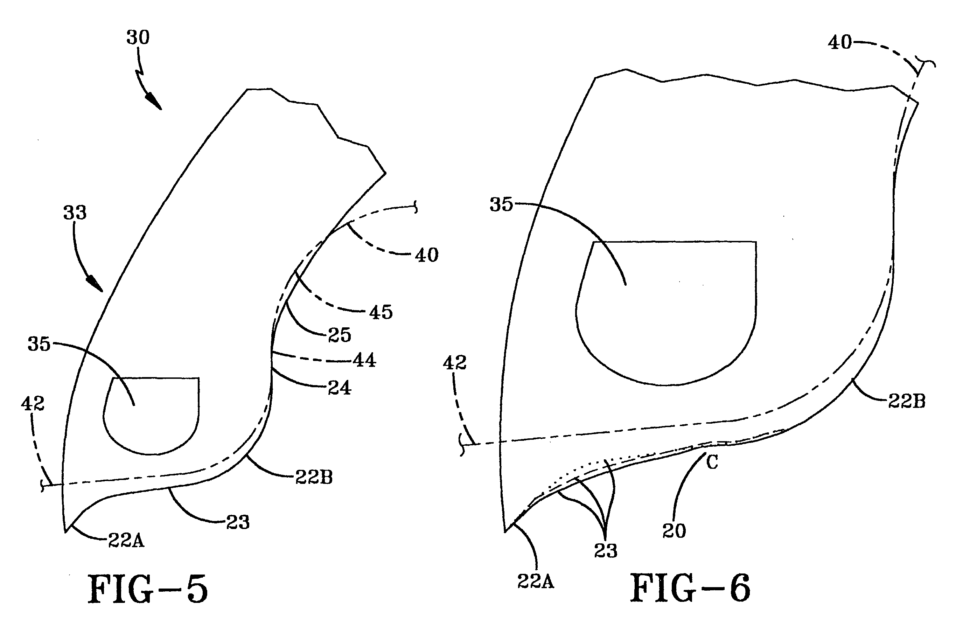

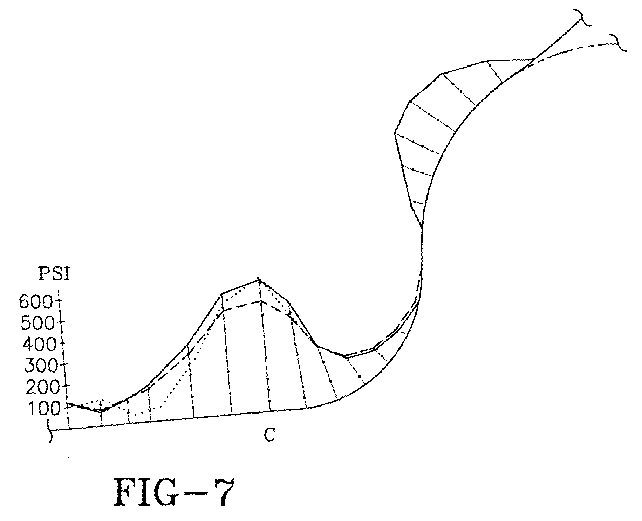

As an example of bead seat profile optimization, consider a passenger tire (30) of size P205/70R15 shown in Figure 4 with a prior art bead design. It has one polyester radial ply and two steel belts. The originally strap bead core construction was deformed during the shaping process in the curing mold. Figure 5 is an overlay of the bead (33) and rim (40) profiles, showing the tire-rim interference along the ledge (42), at the heel (22B), and in the upper flange area (25). An enlarged view of the ledge portion is shown in Figure 6. The dotted line is the prior art bead seat profile (23), while the dashed and the solid lines are bead seat profiles (23) using the present invention. The resulting contact pressure distributions when the tire (30) is mounted and inflated to 26 psi (180 kPa), as predicted by finite element analyses, are shown by the respective patterns of lines in Figure 7.

Essentially the concavity (20) in the bead seat profile (23) and thus the interference distribution makes the pressure distribution less peaky. Changing from the dotted to the solid profile (23) increases the area under the pressure curve and thus the rim slip resistance without changing the peak pressure. If a tire made with the dotted bead seat profile (23) experiences rim slip, the solid profile (23) will be recommended to improve rim slip resistance without causing mounting difficulty. On the other hand, changing from the dotted to the dashed profile (23) lowers the peak pressure without reducing the area under the pressure curve. If a tire (30) made with the dotted bead seat profile (23) experiences mounting difficulty, the dashed profile will be recommended to make mounting easier without sacrificing the rim slip resistance.

Designing a bead seat profile (23) for a pneumatic tire (30) according to the present invention starts with an initial profile $L_1$, extending from the bead heel end (22B) to the bead toe end (22A). The point of local concavity Q is determined by locating the bead core (35) center of the mounted and inflated tire (30) with anticipated bead core (35) deformation and rotation during mounting and inflation, and extending a radial line from the bead core (35) center to intersect the initial profile $L_1$. The anticipated deformation and rotation may come from an analysis or be based on past experience with tires of similar size and construction. If a tire (30) with the initial bead seat profile (23) is available, the point Q could also be identified experimentally as the point with the highest contact pressure, or the point under the bead core center when the tire (30) is mounted and inflated to the normal pressure. A local concavity (20) is established by moving the point Q radially outward to another point Q'; and connecting the point Q' to the two ends of the profile $L_1$ by straight lines or smooth curves to form a revised bead seat profile (23).

The tire engineer must ensure that the concavity (20) in the interference distribution of the bead seat profile is not so great as to cause a dip in the contact pressure curve.

One simple embodiment of the invention is to have two taper angles in the ledge portion of the bead seat profile, say, 5° or less than 5° on the heel side and greater than 5° on the toe side, with the transition from the one smaller angle to the larger angle at the point under the center of the bead core (35) when the tire (30) is inflated.

To further refine and optimize the profile, an analysis such as a finite element analysis can be conducted to study the tire-rim contact pressure distribution, with the bead seat profile (23) divided into multiple, preferably ten or more, line segments. Alternatively, a tire (30) can be made with the bead seat profile (23) and the contact pressure distribution measured experimentally. Based on the analysis or experiment, examine the location and magnitude of the peak pressure. Then, establish a maximum contact pressure based on a limiting mounting inflation pressure. Keeping the peak contact pressure under the preset maximum, iteratively move the individual end points of each segment radially inward or outward until the area under the pressure distribution curve no longer appreciably increases. At that profile the amount of torque resisting rim slip is optimized for that preset maximum contact pressure. The tire designer then simply plots out and smooth out the profile. Other bead design features such as an extended toe to ensure air seal can be incorporated.

Combining the adjustment of the bead seat profile's sharp diameter with the profile revision procedure described above, one can achieve a higher rim slip resistance without causing mounting difficulty, or make mounting easier without reducing the rim slip resistance, or in some cases achieve a higher rim slip resistance and easier mounting.

In all of the figures illustrated above, the bead seat profile (23) is circumferentially continuous around the entire annular surface. The concept of bead seat profiling works for any rim-fitting pneumatic tire, regardless of the tire construction and application, and regardless of its bead core construction, shape, and inclination angle, etc.

In one embodiment of the present invention, the bead seat profile has a localized reduction in the tire-rim interference at an axial location at or near the center of the bead core when the tire is mounted to the rim and inflated to the normal pressure.

In one preferred embodiment the bead base is flat which is horizontal or inclined relative to the tires axis at an angle 0° to 25°, preferably close to the rim ledge's inclination angle.

The bead core can be any cross-sectional shape, including triangular, rectangular, hexagonal, round or circular.

In one preferred embodiment, the bead seat profile, for the design rim, has a tire-rim interference decreasing along the axially inward direction from the location B nearer to the bead heel end (22B) toward the point C under the center of the bead core (35) and increasing from point C toward the location D nearer to bead toe end (22A).

Alternatively, a "localized reduction in percent rubber compression" instead of "localized reduction in the tire-rim interference" can be used to achieve a reduction or control of the peak contact pressure wherein the percentage compression continually decreases from B near the bead heel extending toward the center location C wherein the percentage compression is a minimum value and thereafter increases in value toward the location D near the toe end (22A).

In each of the embodiments wherein the design rim has a single ledge taper angle, the bead seat profile (23) exhibits a concavity (20) extending axially toward the center of the bead core (35) when the tire is unmounted. The location of the concavity, when the tire is mounted onto its rim, is compressed in full contact with the rim ledge.

## Claims

1. A pneumatic tire (30) comprising:
    a pair of bead portions (33), each bead portion having a bead core (35), each bead core having a bead base, radially inward of and wider than each bead base there being a bead seat profile (23), the bead seat profile (23) providing an interference fit between the tire and the ledge (42) of the wheel rim (40) to which the tire is to be mounted, the bead seat profile having a local concavity (20) in the tire-rim interference distribution occurring at or near the point radially inward of the bead core center when the tire is mounted to the rim (40) and inflated to the normal pressure.

2. The pneumatic tire of claim 1 wherein the bead core (35) has an axially outer side and an axially inner side, and the bead seat profile (23) radially inward of the bead core has an interference measurement decreasing axially inwardly from the axially outer side of the bead core (35) toward the center of the bead core, and an interference measurement increasing axially inwardly from the center of the bead core toward the axially inner side of the bead core.

3. The pneumatic tire of claim 1 wherein the bead seat profile (23) for the design rim (40) has a concavity (20) in the tire-rim interference distribution created by a combination of rates of interference change, such as from zero to positive, negative to positive, or positive to more positive, in the direction from the heel side (22B) adjacent the concavity towards the toe side (22A) adjacent the concavity.

4. A pneumatic tire comprising:
    a pair of bead portions (33), each bead portion having a bead core (35), each bead core having a bead base, radially inward of and wider than each bead base there being a bead seat profile (23), the bead seat profile providing an interference fit between the tire (30) and the ledge (42) of the wheel rim (40) to which the tire is to be mounted, the bead seat profile having a localized reduction in the tire-rim interference distribution, or localized reduction in the percent rubber compression or both with the rim ledge occurring at the region radially inward of the rigid bead core center when the tire is mounted to the rim and inflated to the normal pressure.

5. The pneumatic tire of claim 4 wherein the bead base of each bead core (35) is flat and inclined relative to the tire's axis at an angle $\theta$, $\theta$ being 0° to 25°.

6. The pneumatic tire of claim 4 wherein the bead core (35) has an axially outer side and an axially inner side, and the bead seat profile (23) radially inward of the bead core has an interference measurement decreasing axially inwardly from the axially outer side of the bead core toward the center of the bead core, and an interference measurement increasing axially inwardly from the center of the bead core toward the axially inner side of the bead core.

7. A method of designing a bead seat profile (23) for a pneumatic tire (30) comprising the steps of:

    selecting an initial profile $L_1$ extending from the bead heel (22B) end to the bead toe end (22A);
    locating the bead core (35) center of the mounted and inflated tire;
    extending a radial line from the bead core center to intersect the initial profile $L_1$ at a point Q;
    establishing a local concavity (20) by moving the point Q radially outward to a point Q';
    and connecting the point Q' to the heel end and the toe end of $L_1$ by straight lines or smooth curves to form a revised bead seat profile.

8. A method of designing a bead seat profile (23) for a pneumatic tire (30) comprising the steps of:

    selecting an initial profile $L_1$ extending from the bead heel end (22B) to the bead toe end (22A);
    finding the tire-rim contact pressure distribution along the bead seat profile when the tire is mounted and inflated to the normal pressure from an analysis or an experimental measurement;
    locating the point Q on the bead seat profile (23) where the peak contact pressure occurs;
    establishing a local concavity (20) by moving the point Q radially outward to a point Q';
    and connecting the point Q' to the heel end and the toe end of $L_1$ by straight lines or smooth curves to form a revised bead seat profile.

9. The method of designing the bead seat profile (23) for a pneumatic tire (30) of claim 7 or 8, further comprising the steps of:

    selecting a maximum contact pressure;
    dividing the profile into multiple line segments;
    and then moving the individual end points of each segment radially outward or inward such that the area under the pressure distribution curve and thus the resistance to rim slippage is maximized for the selected maximum contact pressure.

FIG-1

FIG-2

FIG-3A

FIG-3B
PRIOR ART

FIG-4

EP 1 149 713 A2

FIG-5

FIG-6

FIG-7